# EUROPÄISCHE PATENTANMELDUNG

(11) **EP 2 292 988 A2**
(43) Veröffentlichungstag der Anmeldung: **09.03.2011**
(21) Anmeldenummer: 10401096.2
(22) Anmeldetag: 08.07.2010
(51) Int. Cl.: F24J 2/52

(54) **Befestigungsvorrichtung für die Befestigung von Solarpaneelen an einer Montageschiene**

(30) Priorität: 18.07.2009 DE 102009033804
(71) Anmelder: fischerwerke GmbH & Co. KG, 72178 Waldachtal (DE)
(72) Erfinder: Böhmel, Philipp, 70565 Stuttgart (DE); Linka, Martin, 72160 Horb a.N. (DE)

(57) **Zusammenfassung**

Die Erfindung betrifft eine Befestigungsvorrichtung (1) für die Befestigung von Solarpaneelen an einer Montageschiene (2) mit einem die nicht dargestellten Solarpaneele übergreifenden Niederhalter (5) und einer in Draufsicht rechteckigen Mutter (9), die durch eine Schraube (11) mit dem Niederhalter (5) verbunden ist. Die Erfindung schlägt vor, den Niederhalter (5) und die Mutter (9) durch eine ovale Schlaufe (14) drehfest zu verbinden, die torsionssteif und in axialer Richtung zur Schraube (11) federnd ist.

## Beschreibung

Die Erfindung betrifft eine Befestigungsvorrichtung für die Befestigung von Solarpaneelen an einer Montageschiene mit den Merkmalen des Oberbegriffs des Anspruchs 1.

"Solarpaneele" meint insbesondere Solarkollektoren zum Erwärmen von Wasser durch Sonnenenergie oder Solarmodule zur Wandlung von Sonnenlicht in elektrischen Strom. Solarpaneele weisen üblicherweise die Form ebener Platten oder flacher, ebener Kästen auf. Montageschienen dienen beispielsweise zur Befestigung von Rohren, Kabeln oder sonstigen Leitungen an Wänden und Decken. Bekannte Montageschienen sind durch Abkanten aus Blech oder durch Strangziehen, Strangpressen oder ein ähnliches Verfahren aus beispielsweise einer Aluminiumlegierung hergestellt. Bestehen die Montageschienen aus Blech, haben sie üblicherweise eine Vierkantrohrform und sind an einer Seite in Längsrichtung durchgehend offen, weisen also einen durchgehenden Schlitz auf. Stranggepresste oder in ähnlicher Weise hergestellte Montageschienen weisen an mindestens einer Längsseite eine T-Nut auf. Zur Befestigung von Solarpaneelen werden Montageschienen beispielsweise auf Dächern befestigt oder es werden Gestelle mit den Montageschienen erstellt, auf denen die Solarpaneele befestigt werden.

Die Offenlegungsschrift DE 10 2006 000 089 A1 offenbart eine Befestigungsvorrichtung für die Befestigung von Solarpaneelen auf Montageschienen. Die bekannte Befestigungsvorrichtung weist einen Niederhalter auf, der in Seitenansicht T-förmig ist. Der Niederhalter wird zwischen zwei Solarpaneelen angeordnet, die er mit seinem Querhaupt an der Oberseite übergreift und nach unten gegen eine Montageschiene spannt, auf der die Solarpaneele aufliegen. Auf diese Weise legt der Niederhalter die Solarpaneele fest. Zum Festlegen eines Solarpaneels auf einer Seite des Niederhalters sieht die genannte Offenlegungsschrift einen Niederhalter vor, der die Form einer abgewinkelten Pratze aufweist, die das Solarpaneel übergreift.

Als weiteres weist die bekannte Befestigungsvorrichtung eine in Draufsicht rechteckige Mutter auf, die zwei einander diametral gegenüberliegende, abgeschrägte Ecken aufweist. Die Mutter lässt sich in Längsrichtung ausgerichtet in die Montageschiene einsetzen, und die abgeschrägten Ecken lassen eine Drehung der Mutter um etwa 90° in der Montageschiene zu, so dass die Mutter in der Montageschiene querstellbar ist und diese hintergreift. Solche Muttern können auch als Hammerkopfmuttern bezeichnet werden.

Eine Schraube verbindet den Niederhalter und die in Draufsicht rechteckige Mutter, sie ist in die Mutter eingeschraubt. Mit der Schraube lässt sich der Niederhalter, der ein oder zwei benachbarte Solarpaneele übergreift, in Richtung zur Mutter ziehen und spannt dabei die Solarpaneele auf die Montageschiene.

Als weiteres weist die bekannte Befestigungsvorrichtung eine Schraubenfeder auf, deren eines Ende am Niederhalter und deren anderes Ende an der in Draufsicht rechteckigen Mutter festgelegt ist und deren Windungen die Schraube, die die Mutter und den Niederhalter verbindet, umschlingen. Die Windungen der Schraubenfeder steigen in gleicher Richtung wie ein Gewinde der Schraube. Die Windungen der Schraubenfeder liegen spielfrei an einem Schaft der Schraube an. Über die Schraubenfeder lässt sich ein Drehmoment vom Niederhalter auf die in Draufsicht rechteckige Mutter übertragen. Bei einer Drehung in Einschraubrichtung legen sich die Windungen der Schraubenfeder fest an den Schraubenschaft an und drehen die Mutter mit dem Niederhalter mit. Die Schraubenfeder ermöglicht eine Drehung der in Draufsicht rechteckigen Mutter in der Montageschiene durch Drehung des Niederhalters, auch wenn die Mutter durch Reibung oder einen anderen Widerstand in der Montageschiene gegen Drehung gebremst wird.

Aufgabe der Erfindung ist, eine alternative Befestigungsvorrichtung für die Befestigung von Solarpaneelen an einer Montageschiene vorzuschlagen, die eine Drehung des Niederhalters auf eine die Montageschiene hintergreifende Mutter oder allgemein ein Hintergreifelement überträgt.

Diese Aufgabe wird erfindungsgemäß durch die Merkmale des Anspruchs 1 gelöst. Die Erfindung sieht einen Drehsicherungsverbinder vor, der den Niederhalter und ein in der Montageschiene durch eine Drehung um einen begrenzten Drehwinkel in Hintergriff bringbares Hintergreifelement drehfest verbindet, wobei eine absolut starre, drehfeste Verbindung nicht zwingend ist. Der Drehsicherungsverbinder verbindet den Niederhalter und das Hintergreifelement mit veränderlichem Abstand und ist neben, d.h. seitlich außerhalb eines Schraubverbinders angeordnet, der den Niederhalter und das Hintergreifelement verbindet. Der Schraubverbinder kann insbesondere eine Schraube oder einen Gewindebolzen aufweisen. Als Hintergreifelement kommen außer einer in Draufsicht rechteckigen, zwei abgeschrägte, diametral gegenüberliegende Ecken aufweisenden Mutter (Hammerkopfmutter) auch sog. Kulissen- oder Nutensteine oder eine Hammerkopfschraube in Betracht, wobei letztere dann auch Teil des Schraubverbinders ist. Die Aufzählung ist nicht abschließend. Als Niederhalter sind Elemente aufzufassen, die an einem oder an benachbarten Solarpaneelen so festlegbar sind, dass sich eine in Richtung der Montageschiene wirkende Kraft auf die Solarpaneele übertragen lässt, die die Solarpaneele gegen die Montageschiene spannt, auf der sie aufliegen.

Die Erfindung ermöglicht eine einfache Anbringung der Befestigungsvorrichtung an den Solarpaneelen und der Montageschiene, wobei es genügt, die Befestigungsvorrichtung am Niederhalter zu halten, um das Hintergreifelement in die Montageschiene einzubringen, in der Montageschiene querzustellen und dadurch in der Montageschiene in Hintergriff zu bringen. Der Niederhalter ist oberhalb der Montageschiene und normalerweise im Bereich einer Oberseite der Solarpaneele gut zugänglich, was für das Hintergreifelement nicht gilt.

Um eine Torsionssteifigkeit zu erhöhen, sieht eine Ausgestaltung der Erfindung mehrere Drehsicherungsverbinder vor, die um den Schraubverbinder herum angeordnet sind. Die Drehsicherungsverbinder können, müssen allerdings nicht über den Umfang gleichmäßig verteilt angeordnet sein. Es können beispielsweise zwei Drehsicherungsverbinder einander gegenüberliegend beiderseits des Schraubverbinders angeordnet sein.

Eine Ausgestaltung der Erfindung sieht eine Seitwärtsbewegung des Drehsicherungsverbinders bei einer Abstandsänderung des Niederhalters vom Hintergreifelement vor. Die Seitwärtsbewegung kann ein Ausbauchen oder Ausknicken eines beispielsweise bogenförmigen oder abgewinkelten Drehsicherungsverbinders sein, wobei auch eine nach innen, d.h. in Richtung zum Schraubverbinder gerichtete Seitwärtsbewegung denkbar ist, also ein Ausbauchen oder Knicken nach innen. Auch kann die Seitwärtsbewegung tangential zum Schraubverbinder verlaufen.

Eine Ausgestaltung der Erfindung sieht vor, dass der Drehsicherungsverbinder in Längsrichtung des Schraubverbinders federnd ausgebildet ist.

Eine Ausgestaltung der Erfindung sieht vor, dass der Drehsicherungsverbinder eine Lasche aufweist, deren Querrichtung insbesondere tangential zum Schrauverbinder verläuft und die vom Niederhalter nach außen und zum Hintergreifelement zurück nach innen, beispielsweise bogenförmig, verläuft. Auf diese Weise lässt sich der Drehsicherungsverbinder einfach und einstückig herstellen. Er weist eine hohe Biegesteifigkeit in Umfangsrichtung zum Schraubverbinder auf und kann dadurch ein hohes Drehmoment vom Niederhalter auf das Hintergreifelement übertragen, wogegen die Steifigkeit in Längsrichtung des Schraubverbinders erheblich kleiner ist und dadurch die Federwirkung in Längsrichtung des Schraubverbinders erzielt. Eine Ausgestaltung der Erfindung sieht vor, dass der Drehsicherungsverbinder eine streifenförmige Schlaufe aufweist, an der der Niederhalter und das Hintergreifelement einander gegenüberliegend angeordnet sind. Den Niederhalter und das Hintergreifelement verbindende Abschnitte der Schlaufe bilden nach außen gewölbte Bögen, die das Hintergreifelement torsionssteif und in axialer Richtung des Schraubverbinders federnd verbinden. Die Torsionssteifigkeit ist vorzugsweise ein Mehrfaches größer als die Federsteifigkeit in axialer Richtung des Schraubverbinders.

Eine Ausgestaltung der Erfindung sieht eine Schnappvorrichtung vor, mit der der Drehsicherungsverbinder am Niederhalter einschnappbar oder auch einrastbar ist, um den Niederhalter mit dem Drehsicherungsverbinder zu verbinden.

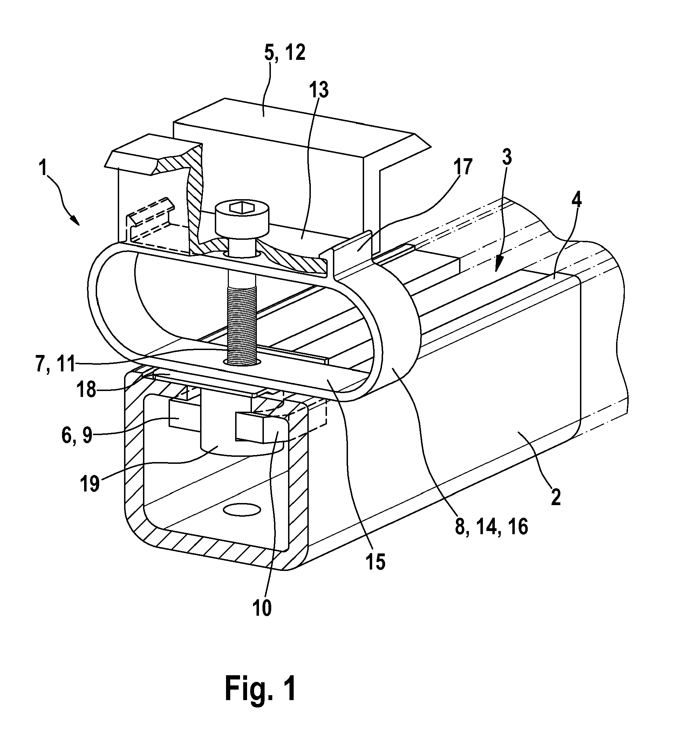

Die Erfindung wird nachfolgend anhand eines in der Zeichnung dargestellten Ausführungsbeispiels näher erläutert. Die einzige Figur zeigt eine erfindungsgemäße Befestigungsvorrichtung in perspektivischer Darstellung.

Die in der Zeichnung dargestellte, erfindungsgemäße Befestigungsvorrichtung 1 ist zur Befestigung nicht dargestellter Solarpaneele auf einer Montageschiene 2 vorgesehen. Solarpaneele sind ebene, plattenförmige oder ebene, flache, schachtelförmige Elemente zum Erwärmen von Wasser oder zur Erzeugung von Strom mit Sonnenenergie. Die dargestellte Montageschiene 2 weist einen Vierkant-Rohrquerschnitt mit einem durchgehenden Längsschlitz 3 in der Mitte einer Längsseite auf, die hier als Oberseite 4 bezeichnet wird.

Die Befestigungsvorrichtung 1 weist einen Niederhalter 5, ein Hintergreifelement 6, einen Schraubverbinder 7 und einen Drehsicherungsverbinder 8 auf. Der Schraubverbinder 7 verbindet den Niederhalter 5 mit dem Hintergreifelement 6, der Drehsicherungsverbinder 8 verbindet den Niederhalter 5 und das Hintergreifelement 6 drehfest und mit veränderlichem Abstand.

Im dargestellten Ausführungsbeispiel der Erfindung ist das Hintergreifelement 6 eine in Draufsicht rechteckige Mutter 9, die diametral gegenüberliegend zwei abgeschrägte Ecken 10 aufweist. Die das Hintergreifelement 6 bildende Mutter 9 lässt sich längs zur Montageschiene 2 ausgerichtet durch deren Längsschlitz 3 in die Montageschiene 2 einbringen und durch eine Drehung um 90° in der Montageschiene 2 querstellen. Quergestellt hintergreift die Mutter 9 die Montageschiene 2 seitlich des Längsschlitzes 3.

Als Schraubverbinder 7 weist die Befestigungsvorrichtung 1 im dargestellten Ausführungsbeispiel eine Schraube 11 auf, die durch ein Mittelloch des Niederhalters 5 gesteckt und in die das Hintergreifelement 6 bildende Mutter 9 eingeschraubt ist.

Der Niederhalter 5 ist im Ausführungsbeispiel ein U-Profil mit seitlich in beide Richtungen abstehenden leistenförmigen Auflageflanschen 12 an freien Enden der "Schenkel" des "U". In befestigtem Zustand liegen die Auflageflansche 12 auf nicht dargestellten, benachbarten Solarpaneelen auf, die auf der Oberseite 4 der Montageschiene 2 aufliegen. Das Mittelloch, durch das die Schraube 11 gesteckt ist, befindet sich in einem Joch 13 des U-förmigen Niederhalters 5. Sofern nur ein Solarpaneel auf einer Seite der Befestigungsvorrichtung 1 befestigt werden soll, kann ein nicht dargestellter Niederhalter verwendet werden, der nur einen Auflageflansch aufweist. Auf der anderen Seite der Befestigungsvorrichtung 1 ist der nicht dargestellte Niederhalter nach unten, d.h. in Richtung der Montageschiene 2 abgewinkelt und stützt sich mit seiner Abwinklung auf der Montageschiene 2 auf, um ein Kippen des Niederhalters beim Spannen des Niederhalters in Richtung zur Montageschiene 2 zu vermeiden. Ein solches Kippen vom Solarpaneel weg kann zu einem Abrutschen des Niederhalters führen.

Der Drehsicherungsverbinder 8 ist im Ausführungsbeispiel ein Kunststoffteil und weist eine ovale, streifenförmige Schlaufe 14 auf. Die Schlaufe 14 weist zwei ebene, zueinander parallele Abschnitte 15 auf, die einstückig in Halbzylinderbögen 16 übergehen, die die ebenen Abschnitte 15 verbinden. Auf einem der ebenen Abschnitte 15 ist der Niederhalter 5 angeordnet, sein Joch 13, das die Form einer ebenen Platte aufweist, liegt auf dem Abschnitt 15 auf. An beiden Enden des ebenen Abschnitts 15 stehen Schnapphaken 17 vom Drehsicherungsverbinder 8 ab, die das Joch 13 des Niederhalters 5 an Stirnenden um- und übergreifen. Der Niederhalter 5 ist durch Einschnappen in die Schnapphaken 17 auf einem der beiden ebenen Abschnitte 15 der Schlaufe 14 des Drehsicherungsverbinders 8 befestigt.

Der andere ebene Abschnitt 15 der Schlaufe 14 des Drehsicherungsverbinders 8 weist eine in Draufsicht quadratische Platte 18 auf seiner Außenseite auf, von der ein rohrförmiger Schaft 19 absteht. Die Platte 18 weist gerundete Ecken auf. Die Platte 18 und der Schaft 19 sind einstückig mit der Schlaufe 14 und damit einstückige Bestandteile des Drehsicherungsverbinders 8. Mit Abstand von der Platte 18 sind einander gegenüberliegend zwei rechteckige Schlitze im Schaft 19 angebracht, die komplementär zum Querschnitt der Mutter 9 sind, und in denen die Mutter 9 aufgenommen ist. Die Mutter 9, die das Hintergreifelement 6 bildet, steht beidseitig aus dem Schaft 19 vor und ist parallel zur Schlaufe 14 und deren ebenen Abschnitten 15 ausgerichtet.

Zur Montage wird die Befestigungsvorrichtung 1 am Niederhalter 5 gehalten und so ausgerichtet, dass die Mutter 9, die das Hintergreifelement 6 bildet, längs zur Montageschiene 2 und deren Längsschlitz 3 ausgerichtet ist. Mit dieser Ausrichtung lässt sich die Mutter 9 durch den Längsschlitz 3 in die Montageschiene 2 einbringen, wozu nicht die Mutter 9 gegriffen werden muss, sondern der Niederhalter 5 gehalten werden kann. Wenn sich die Mutter 9 in der Montageschiene 2 befindet, wird die Befestigungsvorrichtung 1 insgesamt um 90° gedreht und dadurch die Mutter 9 in der Montageschiene 2 in die gezeichnete Stellung quergestellt. Die Mutter 9 hinter- bzw. untergreift die Montageschiene 2 seitlich des Längsschlitzes 3. Die 90°-Drehung wird vom Niederhalter 5 über den Drehsicherungsverbinder 8 auf die Mutter 9 übertragen, der aufgrund seiner Ausgestaltung torsionssteif ist. Die streifenförmige Schlaufe 14 des Drehsicherungsverbinders 1 ist in tangentialer Richtung zur Schraube 11 aufgrund der Streifenform biegesteif und dadurch in axialer Richtung zur Schraube 11 torsionssteif, kann also ein Drehmoment vom Niederhalter 5 auf die Mutter 9 übertragen. Zugleich ist die Schlaufe 14 des Drehsicherungsverbinders 8 in axialer Richtung der Schraube 11 federnd, da dazu die streifenförmige Schlaufe 14 senkrecht zu ihrer Fläche verformt wird und eine niedrige Steifigkeit in dieser Richtung aufweist.

Nach dem Einbringen und Querstellen der Mutter 9 in der Montageschiene 2 wird die Schraube 11 angezogen und spannt den Niederhalter 5 in Richtung der Montageschiene 2. Nicht dargestellte Solarpaneele beiderseits der Befestigungsvorrichtung 1, die von den Auflageflanschen 12 des Niederhalters 5 übergriffen werden, werden auf die Montageschiene 2 gespannt. Beim Spannen gibt die ovale Schlaufe 14 des Drehsicherungsverbinders 1 elastisch federnd nach, wobei die Halbzylinderbögen 16 der Schlaufe 14 ausbauchen, d.h. ihren Wölbungsradius elastisch verkleinern. Die ebenen Abschnitte 15 der Schlaufe 14 können sich dabei ebenfalls elastisch verformen und sind in diesem Fall nicht mehr eben. Die ebenen Abschnitte 15 und die Halbzylinderbögen 16 können seitlich außerhalb der Schraube 11 auch als nach außen stehende Laschen aufgefasst werden.

### Bezugszeichenliste

### Befestigungsvorrichtung für die Befestigung von Solarpaneelen an einer Montageschiene

- 1: Befestigungsvorrichtung
- 2: Montageschiene
- 3: Längsschlitz
- 4: Oberseite
- 5: Niederhalter
- 6: Hintergreifelement
- 7: Schraubverbinder
- 8: Drehsicherungsverbinder
- 9: Mutter
- 10: abgeschrägte Ecke
- 11: Schraube
- 12: Auflageflansch
- 13: Joch
- 14: Schlaufe
- 15: ebener Abschnitt
- 16: Halbzylinderbogen
- 17: Schnapphaken
- 18: Platte
- 19: Schaft

## Patentansprüche

1. Befestigungsvorrichtung für die Befestigung von Solarpaneelen an einer Montageschiene, mit einem Niederhalter (5), der an einem Solarpaneel festlegbar ist, mit einem Hintergreifelement (6), das durch eine Drehung um einen begrenzten Winkel in der Montageschiene (2) in Hintergriff bringbar ist, und mit einem Schraubverbinder (7), der den Niederhalter (5) und das Hintergreifelement (6) verbindet, wobei durch eine Drehbewegung ein Abstand des Niederhalters (5) vom Hintergreifelement (6) veränderbar ist, **gekennzeichnet durch** einen Drehsicherungsverbinder (8), der den Niederhalter (5) und das Hintergreifelement (6) drehfest und mit veränderlichem Abstand verbindet und der neben dem Schraubverbinder (7) angeordnet ist.

2. Befestigungsvorrichtung nach Anspruch 1, **dadurch gekennzeichnet, dass** die Befestigungsvorrichtung (1) mehrere Drehsicherungsverbinder (8) aufweist, die um den Schraubverbinder (7) herum angeordnet sind.

3. Befestigungsvorrichtung nach Anspruch 1, **dadurch gekennzeichnet, dass** der Drehsicherungsverbinder (8) bei einer Änderung des Abstands des Niederhalters (5) vom Hintergreifelement (6) eine Seitwärtsbewegung ausführt.

4. Befestigungsvorrichtung nach Anspruch 1, **dadurch gekennzeichnet, dass** der Drehsicherungsverbinder (8) in Längsrichtung des Schraubverbinders (7) federt.

5. Befestigungsvorrichtung nach Anspruch 1, **dadurch gekennzeichnet, dass** der Drehsicherungsverbinder (8) eine vom Niederhalter (5) nach außen und zum Hintergreifelement (6) wieder zurück nach innen verlaufende Lasche (14, 15, 16) aufweist.

6. Befestigungsvorrichtung nach Anspruch 1, **dadurch gekennzeichnet, dass** der Drehsicherungsverbinder (8) eine Schlaufe (14) aufweist, an der der Niederhalter (5) und das Hintergreifelement (6) einander gegenüberliegend angeordnet sind.

7. Befestigungsvorrichtung nach Anspruch 1, **dadurch gekennzeichnet, dass** der Drehsicherungsverbinder (8) eine Schnappvorrichtung (17) aufweist, die am Niederhalter (5) einschnappbar ist.
